# EUROPÄISCHE PATENTSCHRIFT

(11) **EP 2 987 713 B1**
(45) Veröffentlichungstag und Bekanntmachung des Hinweises auf die Patenterteilung: **28.02.2018**
(21) Anmeldenummer: 15181986.9
(22) Anmeldetag: 21.08.2015
(51) Int. Cl.: B60B 29/00, B62K 25/02, B60B 27/02

(54) **SCHNELLSPANNVORRICHTUNG**
QUICK TENSIONING DEVICE
DISPOSITIF DE SERRAGE RAPIDE

(30) Priorität: 22.08.2014 DE 102014112084
(43) Veröffentlichungstag der Anmeldung: 24.02.2016
(73) Patentinhaber: DT Swiss AG, 2504 Biel (CH)
(72) Erfinder: Walthert, Martin, CH-3270 Aarberg (CH); Spahr, Stefan, 2543 Lengnau (CH); Dr. Meier, Matthias, 2560 Nidau (CH)
(74) Vertreter: BSB Intellectual Property Law

(56) Entgegenhaltungen:
- EP-A2- 2 591 991
- EP-B1- 1 801 005
- DE-U1- 9 101 590
- DE-U1- 29 714 945
- IT-A1- FI20 100 089

## Beschreibung

Die vorliegende Erfindung betrifft eine Schnellspannvorrichtung, insbesondere für wenigstens teilweise und vorzugsweise überwiegend muskelbetriebene Zweiräder wie Fahrräder.

Im Stand der Technik sind verschiedenste Schnellspannvorrichtungen zum Befestigen der Laufräder von Fahrrädern bekannt geworden. Zur lösbaren Befestigung der Laufräder von Rennrädern werden beispielsweise Schnellspannvorrichtungen verwendet, bei denen die erforderlichen Klemmkräfte durch Umlegen des Schnellspannhebels bewirkt werden. Doch insbesondere bei Mountainbikes und auch anderen Fahrrädern hat es sich gezeigt, dass die durch die derart aufgebrachte Haltekraft erzeugte Steifigkeit noch verbessert werden kann.

Mit der EP 1 801 005 B1 ist ein Schnellspanner für Fahrräder bekannt geworden, bei dem die Spannkraft nicht durch das Umlegen des Schnellspannhebels erzeugt wird, sondern unabhängig davon ist. Der Schnellspannhebel ist mit einem Schraubgewinde verbunden, sodass die gewünschte Spannkraft durch die Anzahl der Umdrehungen des Schnellspannhebels aufgebracht wird. Um den Schnellspannhebel in die gewünschte Ruhelage zu bringen, kann der Schnellspannhebel axial nach außen gezogen und in eine gewünschte Ruheposition frei gedreht werden. Diese Schnellspannvorrichtung funktioniert zuverlässig und ermöglicht eine einfache Bedienung. Nachteilig sind der relativ hohe Aufwand für die Mechanik der Schnellspannvorrichtung und das relativ hohe Gewicht.

Im Markt bekannt geworden ist ein Schnellspanner, der auch in der italienischen Patentanmeldung IT FI 2010 0089 A1 mit der Nummer 140057 beschrieben ist. Dieser Schnellspanner, auf dem der Oberbegriff von Anspruch 1 basiert, wirkt mit einer Steckachse zusammen. Die Steckachse weist ein Gewinde an einem Ende der Steckachse und an dem anderen Ende eine Einstecköffnung für einen separaten Schnellspannhebel auf. Zu Montagezwecken wird das Einsteckende des Schnellspannhebels in die Einstecköffnung der Steckachse eingeführt, wobei ein Außensechskant des Einsteckendes des Schnellspannhebels mit einem entsprechenden Innensechskant der Steckachse in Eingriff gerät. Durch Drehen des Schnellspannhebels wird so auch die nun formschlüssig verbundene Steckachse gedreht, sodass sich mit einer entsprechenden Anzahl von Drehbewegungen des Schnellspannhebels die gewünschte Haltekraft des Laufrades ergibt. Da für das Vorderrad und das Hinterrad insgesamt nur ein Schnellspannhebel zur Verfügung gestellt werden muss, kann so schon die Hälfte des Gewichts eingespart werden. Zudem kann ein solcher Schnellspanner insgesamt leichter ausgestaltet werden als ein Schnellspanner nach der EP 1 801 005 B1.

Das Einsteckende des Schnellspannhebels nach der IT FI 2010 0089 A1 weist eine solche Länge auf, dass der Schnellspannhebel bei der Montage oder Demontage ein Stück weit aus der Steckachse herausgezogen werden kann, während der Außensechskant noch einen ausreichenden Eingriff mit dem Innensechskant der Steckachse behält. Dadurch besteht bei einer vollständigen Umdrehung des Schnellspannhebels keine Klemmgefahr für die Finger der Bedienperson zwischen dem Rahmen des Fahrrades und dem Schnellspannhebel. Nach Erreichen der gewünschten Klemmspannung wird der Schnellspannhebel wieder eingeschoben. Der Schnellspannhebel kann aber auch kurz aus der Steckachse herausgezogen und in eine bevorzugte Winkelposition gedreht und dann wieder eingesteckt werden. Es wird eine einfache Bedienung mit einem geringen Gesamtgewicht ermöglicht. Das in die Steckachse eingeführte Einsteckteil muss aber aus einem festen Material bestehen und eine solche Länge aufweisen, dass auch bei teilweisem Herausziehen eine genügende Kontaktfläche zur Steckachse verbleibt, ohne die erforderlichen Klemmkräfte aufzubringen. Dadurch ist das Gesamtgewicht des Schnellspanners höher, als es eigentlich sein müsste.

Es ist deshalb die Aufgabe der vorliegenden Erfindung, eine Schnellspannvorrichtung zur Verfügung zu stellen, welche ein noch geringeres Gesamtgewicht und/oder eine einfachere Bedienung ermöglicht.

Diese Aufgabe wird gelöst durch eine Spanneinrichtung mit den Merkmalen des Anspruchs 1, durch eine Schnellspannvorrichtung mit den Merkmalen des Anspruchs 2 und durch ein Zweirad mit den Merkmalen des Anspruchs 15. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Spanneinrichtung dient zur Montage und Demontage von Zweiradkomponenten an insbesondere wenigstens teilweise muskelbetriebenen Zweirädern wie Fahrrädern. Eine solche Spanneinrichtung umfasst einen Bedienhebel und eine damit verbundene Spannkomponente, wobei die Spannkomponente vorzugsweise manuell mit einer Zweiradkomponente drehfest koppelbar ist. Die Spannkomponente ist vorzugsweise manuell von der Zweiradkomponente entkoppelbar. Der Bedienhebel ist von einer drehfest mit der Spannkomponente verbundenen Eingriffsstellung in eine frei gegenüber der Spannkomponente drehbare Drehstellung bewegbar, insbesondere auch, während die Spannkomponente drehfest mit der Achseinheit und damit der Zweiradkomponente gekoppelt ist.

Eine erfindungsgemäße Schnellspannvorrichtung ist insbesondere für wenigstens teilweise und vorzugsweise überwiegend muskelbetriebene Zweiräder wie Fahrräder vorgesehen und umfasst eine Achseinheit und eine erfindungsgemäße Spanneinrichtung. Die Achseinheit weist eine sich in axialer Richtung erstreckende Achse bzw. eine eine axiale Richtung definierende Achse auf. Weiterhin umfasst die Achseinheit eine Klemmeinrichtung an einem ersten Ende der Achseinheit und ein Befestigungseinrichtung an einem zweiten Ende der Achseinheit. Die Spanneinrichtung dient zur Montage und Demontage der Achseinheit an einem Zweirad bzw. ist dazu geeignet. Die Spanneinrichtung umfasst einen Bedienhebel und eine damit verbundene Spannkomponente. Dabei ist die Spannkomponente z. B. von Hand mit der Achseinheit drehfest koppelbar. Die Spannkomponente ist z. B. von Hand auch von der Achseinheit entkoppelbar. Der Einsatz weiteren Werkzeuges zur Koppelung und Entkoppelung der Spannkomponente mit der Achseinheit ist nicht nötig. Der Bedienhebel der Spanneinrichtung ist von einer drehfest mit der Spannkomponente verbundenen Eingriffsstellung in eine frei gegenüber der Spannkomponente drehbare Drehstellung bewegbar, während die Spannkomponente drehfest mit der Achseinheit gekoppelt sein kann und insbesondere auch damit gekoppelt ist. Das bedeutet, dass die Spannkomponente z. B. drehfest mit der Achseinheit gekoppelt ist, während gleichzeitig der Bedienhebel der Spanneinrichtung in die Drehstellung verbracht werden kann, in der der Bedienhebel frei gegenüber der Spannkomponente drehbar ist.

Dadurch wird eine frei wählbare Orientierung des Bedienhebels gegenüber der Spannkomponente ermöglicht, ohne die Spanneinrichtung von der Achseinheit zu entkoppeln. Das ist sehr vorteilhaft, da damit auch eine noch einfachere Montage ermöglicht wird, bei der der Bedienhebel nicht mehrmals vollständig gedreht wird, sondern von der Hand des Benutzers jeweils nur um einen kleineren Winkelbetrag von z. B. 30 Grad, 45 Grad oder 60 Grad gedreht wird, bevor der Bedienhebel wieder von der Eingriffsstellung in die Drehstellung gebracht und zurück gedreht wird, um anschließend durch eine erneute Drehung die Schnellspannvorrichtung weiter zu schließen bzw. die aufgebrachte Spannung zu erhöhen.

Dadurch wird es ermöglicht, dass die Spannkomponente erheblich kürzer ausgestaltet wird, als es im Stand der Technik mit einem abnehmbaren Bedienhebel möglich war. Der Bedienhebel bzw. die Schnellspannvorrichtung gemäß der vorliegenden Erfindung muss nicht ein Stück aus der Achseinheit heraus gezogen werden, um eine bequeme Montage zu ermöglichen, sondern kann vollständig in die Achseinheit eingeschoben verbleiben, bis die gewünschte Spannung mit dennoch einfacher und ohne Klemmgefahr erfolgender Bedienung aufgebracht wird.

Dadurch kann ein erheblicher Teil des Gewichts der Spannkomponente eingespart werden, da die Eingriffslänge gegenüber dem Stand der Technik beispielsweise halbiert werden kann. Da die Spannkomponente in der Regel aus einem hochfesten Material und insbesondere Metall und vorzugsweise Stahl besteht, wird dadurch ein erheblicher Teil des Gewichts eingespart. Die Achseinheit kann wenigstens teilweise oder vollständig aus einem leichteren Metall und insbesondere einem Leichtmetall bestehen. Möglich ist aber auch der Einsatz von Stahl oder einem faserverstärkten Kunststoff.

Die Spanneinrichtung der vorliegenden Erfindung eignet sich zur Montage und Demontage des Vorderrades, des Hinterrades und auch beispielsweise der Sattelstange bzw. des Sattels, wenn dort eine an die Spannkomponente angepasste Montagehilfe vorgesehen ist.

Die Spanneinrichtung ist nicht nur mit der Achseinheit koppelbar und davon entkoppelbar, sondern kann auch vollständig von der Achseinheit abnehmbar ausgestaltet sein.

Vorzugsweise weist die Spannkomponente eine Koppeleinheit mit einer unrunden Koppelkontur zum Koppeln mit einer entsprechend angepassten Anschlusseinheit mit einer unrund ausgebildeten Anschlusskontur an der Achseinheit auf. Das bedeutet, dass die unrunde Koppelkontur der Koppeleinheit mit der unrund ausgebildeten Anschlusskontur der Achseinheit koppelbar ist, um eine drehfeste Verbindung wahlweise herzustellen.

In einer bevorzugten Weiterbildung der Erfindung wird die Koppeleinheit der Spannkomponente zur Montage und Demontage in die Anschlusskontur eingeführt. Möglich und bevorzugt ist es auch, dass die Koppeleinheit der Spannkomponente zur Montage und Demontage auf die Anschlusskontur der Anschlusseinheit aufgebracht wird. Möglich ist es auch, dass ein Teil der Koppeleinheit zur Montage und/oder Demontage in die Anschlusseinheit eingebracht wird, während ein anderer Teil der Koppeleinheit auf einen anderen Teil der Anschlusseinheit aufgeschoben oder aufgebracht wird. Vorzugsweise ist eines der beiden miteinander zu koppelnden Teile "männlich" und das andere Kopplungsteil "weiblich" ausgebildet, um eine passgenaue und drehfeste Kopplung zu bewirken.

In einer bevorzugten Ausgestaltung weist die Koppeleinheit ein Außenpolygon und/oder ein Innenpolygon auf. Beispielsweise kann die Koppeleinheit einen Außenmehrkant und/oder einen Innenmehrkant aufweisen, um eine passgenaue und drehfeste Kopplung mit der Anschlusseinheit herzustellen.

Es ist von Vorteil, wenn wenigstens eine Rasteinrichtung zur Verrastung der Spannkomponente an der Achseinheit vorgesehen ist. Dadurch kann eine wenigstens im Wesentlichen verliersichere Aufnahme der Spannkomponente an der Achseinheit gewährleistet werden. Ohne das Auftreten besonderer äußerer Kräfte bietet eine solche Rasteinrichtung einen verliersicheren Schutz. Die Rasteinrichtung kann mehrere Rasteinheiten aufweisen, um eine Verrastung in verschiedenen Drehpositionen zu ermöglichen.

In einer besonders bevorzugten Ausgestaltung ist der Bedienhebel durch eine Bewegung in axialer Richtung gegenüber der Spannkomponente von der Eingriffsstellung in die Drehstellung bewegbar. Dabei ist es besonders bevorzugt, wenn der Bedienhebel durch eine von der Spannkomponente weg gerichtete axiale Bewegung von der Eingriffsstellung in die Drehstellung bewegbar ist. Dadurch kann in einem einfachen Fall an dem Bedienhebel gezogen werden, um eine Überführung von der Eingriffsstellung in die Drehstellung zu bewirken.

In bevorzugten Ausgestaltungen ist der Bedienhebel über eine Vorspanneinrichtung in Richtung der Spannkomponente vorbelastet. Eine solche Vorspanneinrichtung kann eine Spiralfeder oder mehrere Spiralfedern oder sonstige Federn umfassen. Möglich ist auch eine Vorbelastung über magnetische oder sonstige Kräfte. Durch eine Vorbelastung des Bedienhebels in Richtung der Spannkomponente und somit in die Eingriffsstellung wird gewährleistet, dass der Benutzer direkt beim Erfassen des Bedienhebels beispielsweise die Spannung erhöhen oder aber die Schnellspannvorrichtung lösen kann. Möglich ist es aber auch, dass die Schnellspannvorrichtung in die Drehstellung vorbelastet ist, sodass bei einem unabsichtlichen Kontakt mit dem Bedienhebel die Spannkraft unverändert bleibt. Um eine definierte Winkelposition des Bedienhebels auch in einer solchen Ausgestaltung zu gewährleisten, kann die freie Drehbewegung des Bedienhebels über Reibung oder dergleichen gehemmt werden, sodass eine einmal eingestellte Drehposition erhalten bleibt. Möglich ist es auch, dass der Bedienhebel in einer oder in einer gewissen Anzahl von Drehpositionen rastend ausgeführt ist.

In vorteilhaften Ausgestaltungen weist die Spannkomponente an einem Ende die Koppeleinheit zur Kopplung mit der Achseinheit und an einem bzw. dem anderen Ende einen insbesondere pilzförmigen Druckknopf auf. Dabei ist an dem Druckknopf vorzugsweise ein umlaufender Kragen vorgesehen, der ein Gegenlager für die Vorspanneinrichtung bildet, die den Bedienhebel in eine bevorzugte Grundposition und insbesondere die Eingriffsstellung vorbelastet. Der umlaufende Kragen kann Unterbrechungen aufweisen.

In einer bevorzugten Ausgestaltung ist der Bedienhebel in der Eingriffsstellung über einen Drehmomentbegrenzer mit der Achseinheit gekoppelt. Ein solcher Drehmomentbegrenzer dient dazu, das maximale Drehmoment des Bedienhebels zu begrenzen, um eine zu hohe Spannkraft an der Schnellspannvorrichtung zu vermeiden. Dabei kann der Drehmomentbegrenzer so ausgebildet sein, wie es im Stand der Technik üblich und offenbart ist. Das übertragbare Drehmoment kann einstellbar oder auch fest vorgegeben sein.

In allen Ausgestaltungen ist es bevorzugt, dass die Achseinheit wenigstens an dem zweiten Ende hohl ausgebildet ist. Es ist möglich und bevorzugt, dass die Achse der Achseinheit eine durchgehende Öffnung im Inneren aufweist.

Vorzugsweise weist die Achseinheit an dem zweiten Ende ein Außengewinde als Befestigungseinrichtung auf. Möglich ist es aber auch, dass die Befestigungseinrichtung einen Bajonettverschluss aufweist, der in einer Winkelposition eine feste Aufnahme an dem Rahmen eines Zweirads ermöglicht, während der Bajonettverschluss in einer anderen Winkelposition z. B. dem Rahmen des Zweirads entnommen werden kann. Ein solcher Bajonettverschluss kann z. B. in der Form eines Schlüssels/Schlüssellochs ausgebildet sein und mit dem entsprechend ausgestaltetem Rahmen zusammenwirken.

In allen Ausgestaltungen ist es bevorzugt, dass an dem Bedienhebel und an der Spannkomponente jeweils aneinander angepasste unrunde Eingriffskonturen ausgebildet sind, welche in der Eingriffsstellung in Eingriff miteinander stehen. Da sich die Eingriffskonturen des Bedienhebels und der Spannkomponente nur über eine gewisse axiale Breite überlappen, können die Eingriffskonturen durch eine relative Axialverschiebung des Bedienhebels außer Eingriff gebracht werden, wodurch der Bedienhebel in die Drehposition verbracht wird und dort frei in beide Drehrichtungen gedreht werden kann.

Die unrunden Eingriffskonturen an dem Bedienhebel und der Spannkomponente können beispielsweise in der Form von Verzahnungen ausgebildet sein. Bevorzugt sind Ausgestaltungen mit Außen- und Innenpolygonen oder mit Außen- und Innenmehrkantflächen. Besonders bevorzugt sind Radialverzahnungen an dem Bedienhebel und der Spannkomponente, wobei der Bedienhebel vorzugsweise eine radiale Innenverzahnung aufweist und die Spannkomponente eine radiale Außenverzahnung umfasst. Möglich ist es auch, dass der Bedienhebel mit der Spannkomponente über Axialverzahnungen als Eingriffskonturen im Eingriff steht.

Der Bedienhebel weist vorzugsweise eine Spannhülse auf oder ist damit fest verbunden, wobei die unrunde Eingriffskontur vorzugsweise an der Spannhülse vorgesehen ist.

In allen Ausgestaltungen beträgt vorzugsweise ein Verhältnis aus einer Überlappungslänge der miteinander im Eingriff stehenden Koppeleinheit und der Anschlusseinheit bezogen auf einen Durchmesser der Koppeleinheit kleiner als 4:1 und vorzugsweise kleiner als 3:1 und kann insbesondere auch kleiner als 2:1 sein. Besonders bevorzugt ist ein Verhältnis des in eine Anschlusseinheit einführbaren Teils der Spannkomponente bzw. der Koppeleinheit zu dem Durchmesser des einführbaren Teils der Spannkomponente kleiner als 4:1 und vorzugsweise kleiner als 3:1, wenn die Koppeleinheit der Spannkomponente als "männliches Teil" ausgeführt ist. Wenn die Koppeleinheit der Spannkomponente als "weibliches Teil" ausgeführt ist, dann ist eine Länge des einführbaren Teils der Anschlusseinheit kleiner als dessen vierfacher und insbesondere dreifacher Durchmesser.

Die erfindungsgemäße Spanneinrichtung hat viele Vorteile, da sie eine einfache Bedienung bei einem insgesamt geringeren Gesamtgewicht ermöglicht. Die Spanneinrichtung benötigt keine Spannkomponente großer axialer Länge, da die Spannkomponente nicht aus einer Zweiradkomponente teilweise herausgezogen werden muss, um den Bedienhebel ohne Klemmgefahr zu bedienen. Der Bedienhebel zur Erzeugung der gewünschten Spannkraft oder zur Verminderung der anliegenden Spannkraft kann ein Stück weit gedreht werden kann und anschließend in die Drehstellung überführt werden. Dort kann der Bedienhebel ohne Einfluss auf die Spannkraft entsprechend zurückgedreht werden. Danach wird der Bedienhebel wieder in die Eingriffsstellung verbracht und dort zur weiteren Erhöhung (oder Verringerung) der Spannkraft gedreht. Deshalb kann die Spannkomponente kürzer und leichter gestaltet werden. Es ist nicht nötig, die Spannkomponente länger als nötig auszubilden, um eine drehfeste Koppelung auch bei halb herausgezogener Spannkomponente zu gewährleisten.

Eine erfindungsgemäße Spanneinrichtung kann bei der Montage und Demontage unterschiedlichster Zweiradkomponenten eingesetzt werden, sodass es ausreichend ist, eine einzige geeignete Spanneinrichtung an einem Zweirad zu bevorraten. Gegebenenfalls kann der Benutzer die Spanneinrichtung auch am Körper oder in einem Rucksack oder einer Tasche oder dergleichen tragen, sodass die mit der Spanneinrichtung angebrachten Zweiradkomponenten in einem gewissen Umfang vor Diebstahl geschützt sind.

In bevorzugten Ausgestaltungen ist die Spanneinrichtung ausgebildet, wie eine Spanneinrichtung einer zuvor beschriebenen Schnellspannvorrichtung.

Ein erfindungsgemäßes Zweirad weist einen Rahmen, eine Gabel, einen wenigstens teilweise muskelbetriebenen Antrieb und Zweiräder, nämlich ein Vorderrad und ein Hinterrad auf. Jedes Rad umfasst eine Nabe und eine zugeordnete Achseinheit. Es sind eine erfindungsgemäße Spanneinrichtung mit einem Bedienhebel und eine damit verbundene Spannkomponente angeordnet. Die Spannkomponente ist z. B. von Hand mit der Achseinheit drehfest koppelbar. Die Spannkomponente ist z. B. von Hand auch von der Achseinheit entkoppelbar. Der Bedienhebel der Spanneinrichtung ist von einer Eingriffsstellung, in der der Bedienhebel drehfest mit Spannkomponente verbunden ist, in eine Drehstellung bewegbar, in der der Bedienhebel frei gegenüber der Spannkomponente drehbar ist, insbesondere auch, während die Spannkomponente drehfest mit der Achseinheit gekoppelt ist.

Auch das erfindungsgemäße Zweirad hat viele Vorteile. Das Zweirad kann insgesamt mit einem geringeren Gesamtgewicht zur Verfügung gestellt werden, da durch den Einsatz der Spanneinrichtung insgesamt Gewicht gespart werden kann. Gleichzeitig kann eine einfache Bedienung ermöglicht werden. Vorzugsweise ist genau eine Spanneinrichtung für die Montage und Demontage der beiden Räder vorgesehen.

In bevorzugten Ausgestaltungen weist das Zweirad wenigstens eine Schnellspannvorrichtung auf, wie sie zuvor beschrieben wurde.

Besonders bevorzugt ist die Spanneinrichtung an der Achseinheit des Hinterrades lösbar befestigt. Besonders bevorzugt ist an dem Vorderrad keine Spanneinrichtung vorgesehen. Dadurch kann eine verbesserte Aerodynamik erzielt werden, da ein an dem Vorderrad nach außen abstehender Bedienhebel die Aerodynamik dort stört. Gleichzeitig wird das Gesamtgewicht reduziert und eine einfachere Bedienung wird ermöglicht.

Insgesamt ermöglicht die Erfindung ein geringeres Gewicht einer Schnellspannvorrichtung und eines Fahrrades insgesamt, insbesondere da nur eine Spanneinrichtung für ein Zweirad insgesamt ausreicht. Wenn die Spanneinrichtung mit dem Bedienhebel am Hinterrad angeordnet wird, so verbessern sich die Optik und insbesondere die Aerodynamik. Die Kosten können reduziert werden, da nur ein Hebel für das Fahrrad insgesamt eingesetzt wird. Die Spanneinrichtung kann nicht nur zur Montage der Räder dienen, sondern beispielsweise auch für die Sattelklemmung genutzt werden.

Wird an der Schnittstelle zwischen Spannkomponente und Achseinheit ein konventioneller Innenmehrkant oder ähnliches eingesetzt so kann ein Mechaniker beispielsweise bei einem Rennen das Laufrad mit einem (z. B. Akku-) Schnellschrauber schnell und sicher aus- und einbauen. Während der Wartezeit auf den Servicemechaniker kann der Fahrer trotzdem bereits mit dem Lösen des Laufrades beginnen.

Überraschenderweise hat sich gezeigt, dass trotz des höheren Aufwands für die Spanneinrichtung insgesamt eine noch einfacher zu bedienende Schnellspannvorrichtung mit einem geringeren Gesamtgewicht ermöglicht wird.

Ein erheblicher Vorteil ist in allen Ausgestaltungen auch, dass der Orientierungswinkel des Bedienhebels unabhängig von dem Winkel der Spannkomponente zu der Achseinheit ist. Wird z. B. ein Vierkant oder Sechskant für die Koppeleinheit der Spannkomponente und die Anschlusseinheit der Achseinheit gewählt (eines davon als männliches Teil und das andere als dazu passendes weibliches Teil ausgeführt), so kann die Spannkomponente in genau vier oder sechs unterschiedlichen Winkelpositionen angeordnet werden. Bei der vorliegenden Erfindung kann der Orientierungswinkel aber auch über die relative Winkelposition der Eingriffskonturen des Bedienhebels und der Spannkomponente zueinander eingestellt werden. Werden dort Verzahnungen mit 12 und insbesondere wenigstens 18 und vorzugsweise 24 Zähnen oder mehr (oder abgerundeten nach außen bzw. innen stehenden Vorsprüngen) gewählt, so kann der Bedienhebel in eine Vielzahl von Positionen verbracht werden. Dann kann der gewünschte Drehwinkel passend zur Gabel oder zu den Ausfallenden eingestellt werden.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Seitenansicht eines Mountainbikes;
- Fig. 2: eine schematische Seitenansicht eines Renn- bzw. Tourenrades;
- Fig. 3: eine Gesamtansicht einer erfindungsgemäßen Schnellspannvorrichtung;
- Fig. 4a: einen vergrößerten Schnitt durch die Schnellspannvorrichtung nach Fig. 3 in der Eingriffsposition;
- Fig. 4b: einen vergrößerten Schnitt durch die Schnellspannvorrichtung nach Fig. 3 in der Drehposition;
- Fig. 5: eine perspektivische Ansicht der Schnellspannvorrichtung nach Fig. 3;
- Fig. 6: eine weitere Schnellspannvorrichtung in einer ersten perspektivischen Ansicht;
- Fig. 7: die Schnellspannvorrichtung nach Fig. 6 in einer anderen perspektivischen Ansicht;
- Fig. 8: einen schematischen Schnitt durch die Schnellspannvorrichtung nach Fig. 6 in zusammengebautem Zustand;
- Fig. 9: eine schematische Schnittdarstellung einer weiteren Schnellspannvorrichtung;
- Fig. 10: eine Vorderansicht der Komponenten der Schnellspannvorrichtung nach Fig. 9;
- Fig. 11: noch eine andere erfindungsgemäße Schnellspannvorrichtung in einer perspektivischen Darstellung;
- Fig. 12: die Schnellspannvorrichtung nach Fig. 11 in einer weiteren perspektivischen Darstellung; und
- Fig. 13: einen schematischen Querschnitt durch die Schnellspannvorrichtung nach Fig. 11 in der Eingriffsstellung.

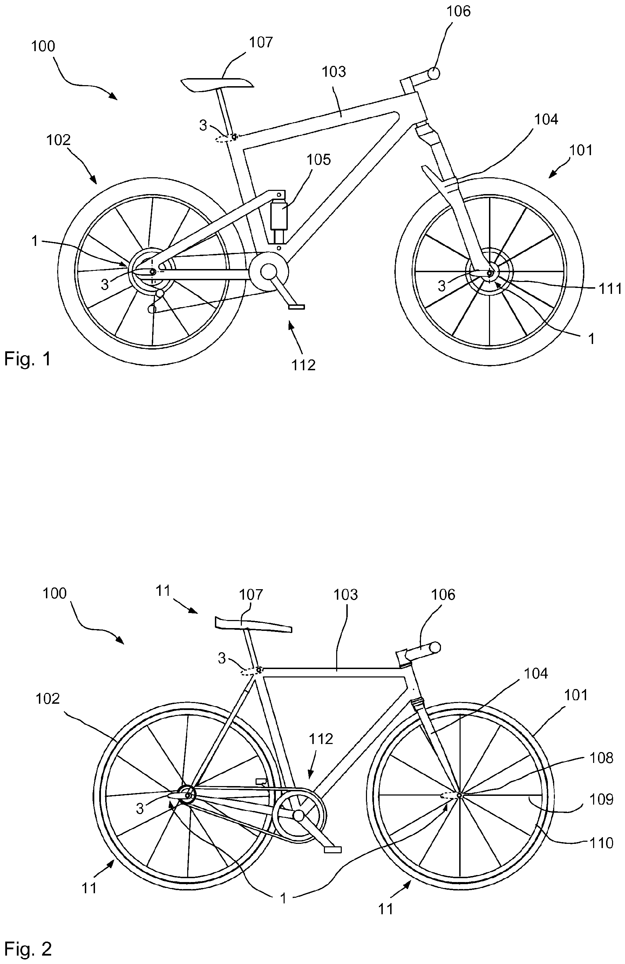

Figur 1 zeigt eine schematische Darstellung eines Mountainbikes als Fahrrad bzw. Zweirad 100. Das Fahrrad weist ein Vorderrad 101, ein Hinterrad 102, einen Rahmen 103, eine Federgabel 104, einen Hinterraddämpfer 105, einen Lenker 106 und einen Sattel 107 auf. Als Antrieb 112 sind Pedale und hier eine Kettenschaltung vorgesehen. Das Vorderrad 101 und das Hinterrad 102 sind jeweils über eine Schnellspannvorrichtung 1 an der Gabel 104 bzw. dem Rahmen 103 befestigt. Die Schnellspannvorrichtung 1 weist dabei eine Spanneinrichtung 3 auf, die gestrichelt an der Sattelstütze des Sattels 107 eingezeichnet ist und die auch zur Einstellung der Sattelhöhe eingesetzt werden kann.

Figur 2 zeigt eine stark schematische Seitenansicht eines Rennrades oder Tourenrades als Zweirad 100, wobei das Fahrrad wiederum über ein Vorderrad 101 und ein Hinterrad 102 verfügt, die an der Gabel 104 bzw. dem Rahmen 103 befestigt sind. Das Vorderrad und das Hinterrad 101, 102 weisen jeweils Speichen 109 und eine Felge 110 auf. Eine Scheibenbremse 111 (vergleiche Figur 1) kann vorgesehen sein, muss es aber nicht. Hier ist eine Schnellspannvorrichtung 1 am Hinterrad inklusive einer Spanneinrichtung 3 eingezeichnet. Die Spanneinrichtung 3 der Schnellspannvorrichtung 1 kann von dem Hinterrad 102 abgenommen und an dem Vorderrad 101 angesetzt werden, wie es in Figur 2 gestrichelt dargestellt ist, um nämlich auch das Vorderrad zu montieren und gegebenenfalls zu demontieren. Die Spanneinrichtung 3 kann auch zur Justage der Höhe des Sattels 107 dienen. Das Vorderrad 101, das Hinterrad 102 und die Sattelstütze können insofern auch als Zweiradkomponenten 11 bezeichnet werden.

Bei dem in Figur 2 dargestellten Zweirad 100 wird ein optisch gefälliger Gesamteindruck erzielt, da der Bedienhebel der Schnellspannvorrichtung 1 nur am Hinterrad vorgesehen ist. Im normalen Betriebszustand ist am Vorderrad 101 keine Spanneinrichtung 3 mit einem dazugehörigen Bedienhebel vorgesehen. Das Gleiche trifft auf die Befestigung der Sattelstütze zu. Im Bedarfsfall kann die Spanneinrichtung 3 mit dem Bedienhebel vom Hinterrad gelöst werden und zur Montage bzw. Demontage des Vorderrades oder der Sattelstütze oder weiterer Zweiradkomponenten 11 verwendet werden.

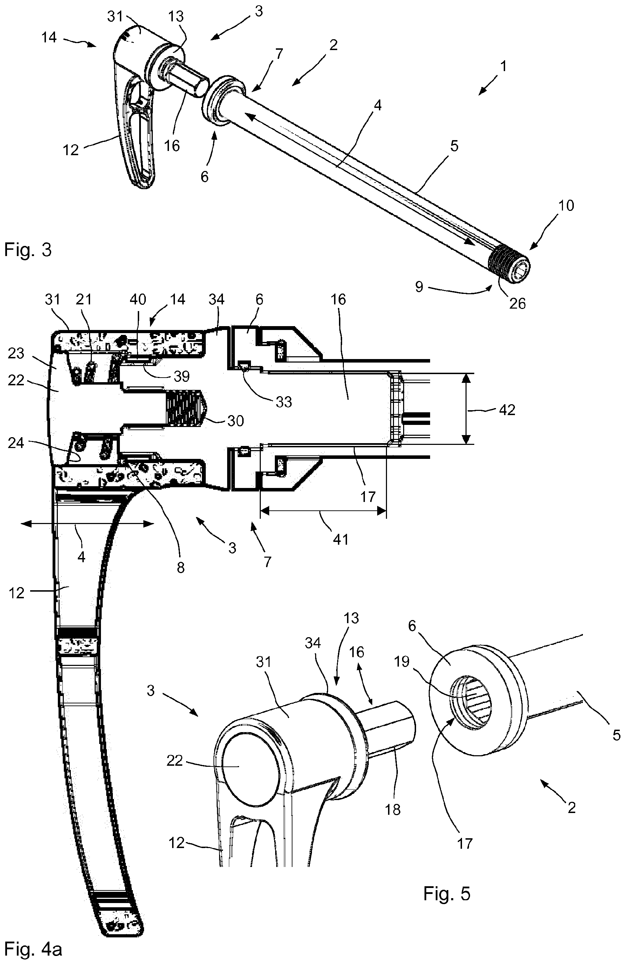

Figur 3 zeigt eine perspektivische Gesamtdarstellung einer erfindungsgemäßen Schnellspannvorrichtung 1 vor dem Einstecken der Spanneinrichtung 3 in die Achseinheit 2. Dadurch ist die Koppeleinheit 16 der Spanneinrichtung 3 in Figur 3 erkennbar. Die Achseinheit 2 umfasst die Achse 5, die hier als Steckachse ausgebildet ist und sich entlang der axialen Richtung 4 erstreckt. An dem ersten Ende 7 der Achse 5 ist eine Klemmeinrichtung 6 vorgesehen, während an dem zweiten Ende 10 der Achse 5 eine Befestigungsreinrichtung 9 angeordnet ist. Die Befestigungseinrichtung 9 ist hier im Ausführungsbeispiel als Außengewinde 26 auf der Achse 5 ausgebildet. Hier im Ausführungsbeispiel wird die Achseinheit 2 durch die Ausfallenden und die Nabe eines Laufrades eingeführt und mittels der Spanneinrichtung 3 wird die Achseinheit 2 an dem Rahmen 103 so befestigt, dass die Nabe 108 zwischen den Ausfallenden des Rahmens 103 oder der Gabel 104 geklemmt wird.

Zur Bedienung dient die Spanneinrichtung 3, die eine Spannkomponente 13 und einen daran befestigten Bedienhebel 12 umfasst. Nach dem Einführen der Koppeleinheit 16 der Spanneinrichtung 3 in die Anschlusseinheit 17 (vgl. Figur 5) der Achseinheit 2 ist die Koppeleinheit 16 drehfest mit der Achseinheit 2 gekoppelt, sodass in der in Figur 3 dargestellten Eingriffsstellung 14 eine Drehbewegung des Bedienhebels 12 zu einer gekoppelten Drehbewegung der Achseinheit 2 und der Achse 5 und somit auch des Außengewindes 26 der Achseinheit 2 führt.

Figur 4a zeigt einen schematischen Querschnitt durch die Spanneinrichtung 3 und einen Teil der Achseinheit 2 in der Eingriffsstellung 14.

Von der Achseinheit 2 ist hier ein Teil der Achse 5 und die Klemmeinrichtung 6 zu sehen. Die Achseinheit 2 weist in ihrem Inneren eine Anschlusseinheit 17 mit einer Anschlusskontur 19 auf (vgl. Figur 5).

Die Spanneinrichtung 3 wird im Wesentlichen durch die Spannkomponente 13 und den Bedienhebel 12 gebildet. Der Bedienhebel 12 weist eine hier integral und einstückig ausgebildete Spannhülse 31 auf, von der sich der Handgriff des Bedienhebels aus radial nach außen erstreckt.

An der Spannkomponente 13 ist ein Gewinde 30 vorgesehen, in das ein in etwa pilzförmig ausgestalteter Druckknopf 22 eingeschraubt ist.

Der Druckknopf 22 weist am äußeren Ende einen radial abstehenden Kragen 23 auf, der ein Gegenlager 24 für die zwischen dem Kragen 23 und einem Absatz 8 der Spannhülse 31 angeordnete Vorspanneinrichtung 21 auf. Die Vorspanneinrichtung 21 ist hier als Spiralfeder ausgebildet, die sich einerseits an dem radialen Absatz 8 der Spannhülse 31 und andererseits an dem Gegenlager 24 abstützt. Dadurch wird der Bedienhebel 12 in die in Figur 4a dargestellte Eingriffsstellung 14 vorbelastet. In dieser Eingriffsstellung 14 sind die Außenverzahnungen 39 der Spannkomponente 13 und die Innenverzahnung 40 der Spannhülse 31 miteinander im Eingriff, sodass der Bedienhebel 12 drehfest mit der Spannkomponente 13 gekoppelt ist. Der radial nach innen abstehende Absatz 8 zur Abstützung der Vorspanneinrichtung 21 kann auch durch die Innenverzahnung 40 der Spannhülse 31 gebildet werden. Ein separat ausgebildeter Absatz ist auch möglich.

Zur Anlage und zur besseren Führung der Spanneinrichtung 3 an der Achseinheit 2 dient die Anlagescheibe 34, die an der axial äußeren Seite der Klemmeinrichtung 6 anliegt.

Um im montierten Zustand die Spanneinrichtung 3 verlustsicher an der Achseinheit 2 aufzunehmen, ist ein O-Ring 32 im Inneren der Anschlusseinheit 17 der Klemmeinrichtung 6 vorgesehen.

Zur Überführung des Bedienhebels 12 von der Eingriffsstellung 14 in die Drehstellung 15 wird der Bedienhebel 12 axial nach außen von der Achseinheit 2 weg entlang der axialen Richtung 4 bewegt.

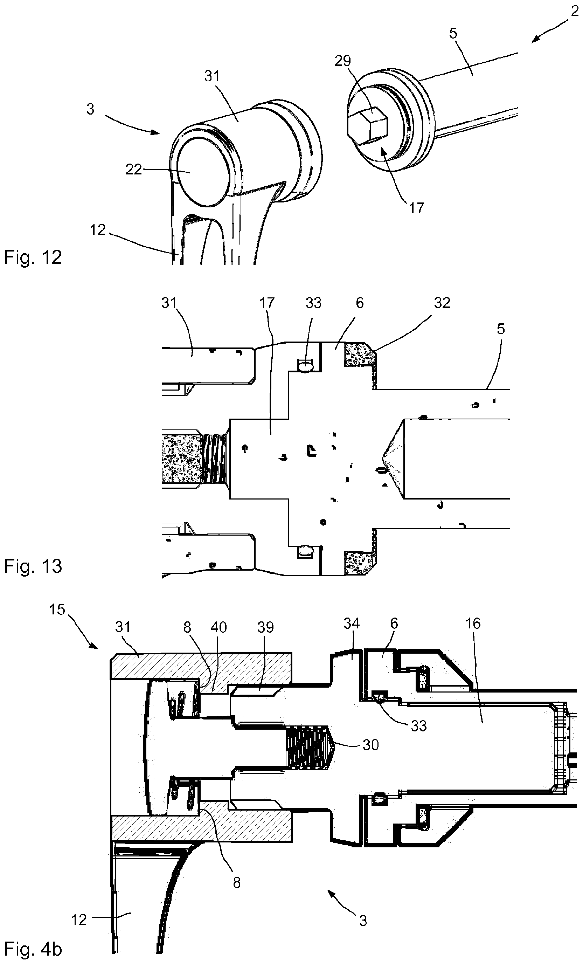

Figur 4b zeigt die Spanneinrichtung 3 in einer schematisch geschnittenen Darstellung in der Drehstellung 15. Dabei ist der Bedienhebel 12 mit der Spannhülse 31 axial nach außen gezogen worden, sodass die Vorspanneinrichtung 21 axial komprimiert wird. In der dargestellten Drehposition 15 sind die Innenverzahnung 40 an der Spannhülse 31 und die Außenverzahnung 39 an der Spannkomponente außer Eingriff, sodass eine freie Drehbewegung des Bedienhebels 12 in beide Drehrichtungen möglich ist. Dabei kann der Benutzer den Druckknopf 22 als Gegenlager 24 für die auf den Bedienhebel 12 aufgebrachte Kraft nutzen. Das bedeutet, dass der Benutzer beispielsweise mit seinem Daumen sich auf der Außenseite des Druckknopfes 22 abstützt, um den Bedienhebel 12 gegen die Kraft der Vorspanneinrichtung 21 axial nach außen in die Drehstellung 15 zu ziehen. Nach der Drehung in die gewünschte Position kann der Benutzer den Bedienhebel 12 loslassen, sodass sich der Bedienhebel 12 durch die Vorspannkraft der Vorspanneinrichtung 21 bedingt wieder selbsttätig in die Eingriffsstellung 14 begibt.

Figur 5 zeigt eine andere perspektivische Darstellung eines Teils der Schnellspannvorrichtung 1, wobei die Anschlusseinheit 17 mit der inneren Anschlusskontur 19 an der Achseinheit 2 erkennbar ist. Die Koppeleinheit 16 weist hingegen eine außen liegende Koppelkontur 18 auf, die entsprechend an die Anschlusskontur 19 der Anschlusseinheit 17 angepasst ist. Hier sind die Koppeleinheit 16 und die Anschlusseinheit 17 als Außensechskant bzw. Innensechskant ausgeführt.

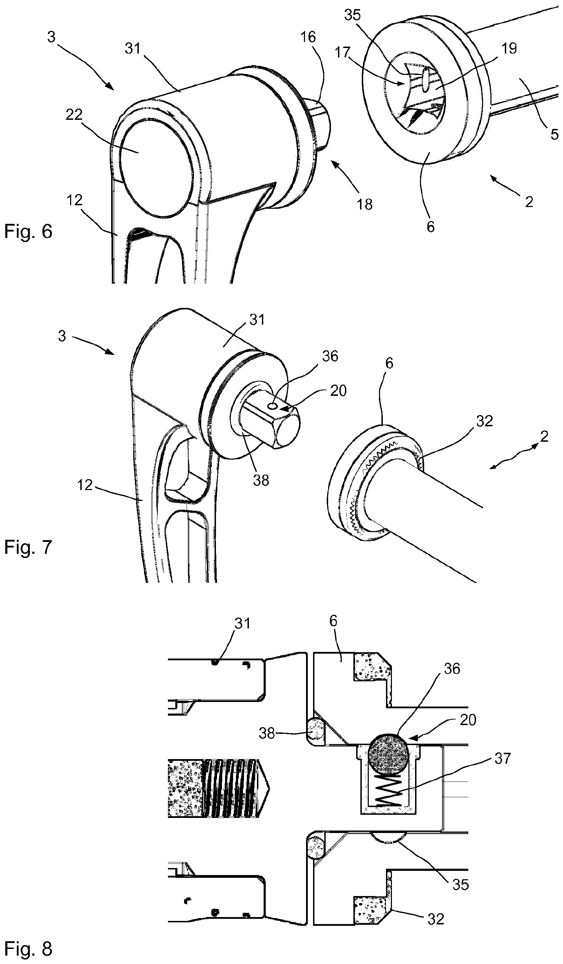

Figur 6 zeigt ein anderes Ausführungsbeispiel einer erfindungsgemäßen Schnellspannvorrichtung 1, die wiederum eine Achseinheit 2 und eine Spanneinrichtung 3 umfasst.

Die Koppelkontur 18 der Koppeleinheit 16 ist hier als Außenvierkant ausgebildet, während in der Achseinheit 2 eine entsprechende Anschlusskontur 19 der Anschlusseinheit 17 vorgesehen ist, um den Vierkant der Koppeleinheit 16 passgenau aufzunehmen.

Zusätzlich sind hier mehrere Rastvertiefungen 35 an der Achseinheit 2 vorgesehen, die Teil einer Rasteinrichtung 20 sind.

Figur 7 zeigt eine andere perspektivische Darstellung der Schnellspannvorrichtung 1 nach Figur 6, wobei hier der Rastvorsprung 36 der Rasteinrichtung 20 an der Koppeleinheit 16 zu erkennen ist. Der Rastvorsprung 36 ist in die dargestellte Position durch eine Feder vorbelastet und dient zur Verrastung mit der Rastvertiefung 35 an der Anschlusseinheit 17. Ein O-Ring 38 ist an dem Übergang zwischen der Anlagescheibe 34 und der Koppeleinheit 16 vorgesehen.

An der Klemmeinrichtung 6 ist eine Rändelscheibe 32 vorgesehen.

Figur 8 zeigt einen schematischen Querschnitt durch die Schnellspannvorrichtung 1 nach Figur 6 im zusammengebauten Zustand. Der Rastvorsprung 36 wird durch eine Kugel gebildet, die durch eine Rastfeder 37 in die dargestellte Position vorbelastet ist. Die Kugel und somit der Rastvorsprung 36 greift in eine der hier vier vorgesehenen Rastvertiefungen 35 ein. Dadurch wird ein zuverlässiger Halt der Schnellspannvorrichtung 1 an der Achseinheit 2 erzielt. Durch eine entsprechende Federkraft kann die Haltekraft eingestellt werden.

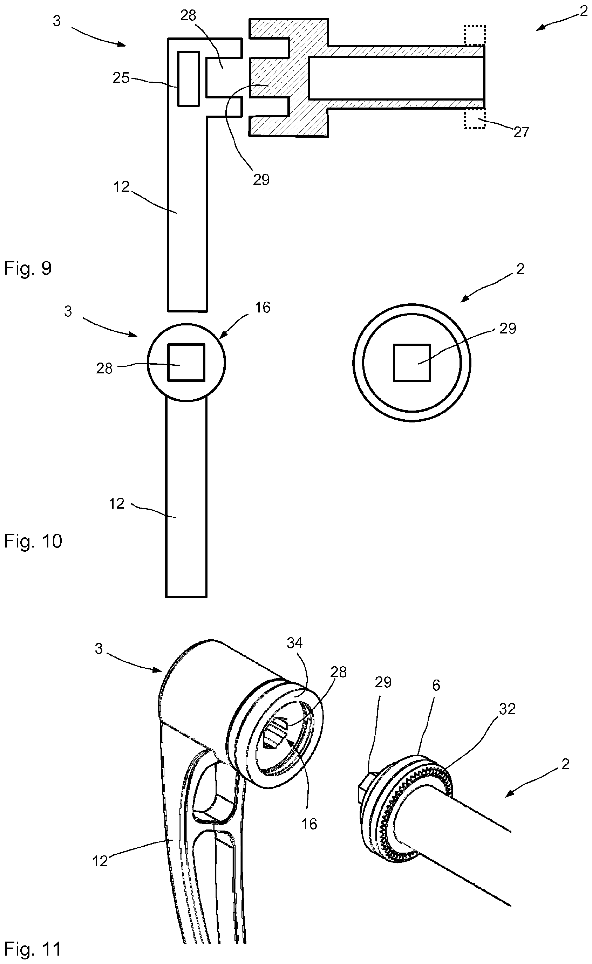

Figur 9 zeigt ein weiteres stark schematisches Ausführungsbeispiel einer weiteren erfindungsgemäßen Schnellspannvorrichtung 1. Dabei ist auf der linken Seite die Spanneinrichtung 3 dargestellt, während auf der rechten Seite die Achseinheit 2 in fließender Stellung schematisch abgebildet ist.

In Figur 10 sind die Vorderansichten der Spanneinrichtung 3 und der Achseinheit 2 abgebildet. Hier bildet die Anschlusseinheit 17 eine "männliche" Anschlusskontur 29, die in eine "weibliche" ausgebildete Koppelkontur 28 der Koppeleinheit 16 eingreifen kann. Wie in Figur 10 zu erkennen, ist die Anschlusskontur 29 hier als Vierkant ausgebildet, kann aber ebenso als Sechskant ausgebildet werden oder eine sonstige Verzahnung aufweisen, die mit einer entsprechende Verzahnung oder dergleichen der Koppeleinheit 16 zusammenwirkt.

Zusätzlich ist hier ein Drehmomentbegrenzer 25 vorgesehen, der verhindert, dass ein vorbestimmtes Drehmoment bei der Montage überschritten wird. Dadurch wird gewährleistet werden, dass bei der Montage mit dem Bedienhebel 12 immer das vorgesehene Drehmoment angelegt und nicht überschritten wird.

Figur 11 zeigt ein weiteres Ausführungsbeispiel einer erfindungsgemäßen Schnellspannvorrichtung in einer schematischen perspektivischen Darstellung, wobei hier die männlich ausgebildete Anschlusskontur 29 der Anschlusseinheit 17 von der Achseinheit 2 nach außen vorsteht. Dementsprechend ist in der Spanneinrichtung 3 eine Koppeleinheit 16 mit einer weiblich ausgebildeten Koppelkontur 28 vorgesehen, in die die Anschlusskontur 29 der Anschlusseinheit 17 eingreift, um beispielsweise ein Laufrad zu montieren oder zu demontieren.

Figur 12 zeigt eine schematische perspektivische Darstellung von der anderen Seite aus, sodass die Anschlusseinheit 17 mit der hier männlich ausgebildeten Anschlusskontur 29 klar erkennbar ist.

Figur 13 zeigt einen schematischen Querschnitt durch die Schnellspannvorrichtung 1, die funktionell bzgl. der Kopplung des Bedienhebels 12 mit der Spannkomponente 1 hier genauso funktioniert, wie in allen anderen Ausführungsbeispielen auch. Wie im Schnitt gemäß Figur 13 klar erkennbar ist, ragt die Anschlusskontur 29 der Anschlusseinheit 17 in die Spanneinrichtung 3 hinein und ist formschlüssig mit der Koppelkontur 28 der Koppeleinheit 16 verbunden.

Insgesamt wird durch die Erfindung eine leichte Schnellspannvorrichtung 1 zur Verfügung gestellt, die sehr einfach zu bedienen ist. Dadurch, dass der Bedienhebel 12 außer Eingriff mit der Spannkomponente 13 gebracht werden kann, wird eine einfache Montage und Demontage von Laufrädern ermöglicht. Die Länge der Spannkomponente 13, die regelmäßig aus festem Stahl besteht, kann deutlich reduziert werden. Auch wenn die Spannkomponente 13 teilweise oder vollständig aus einem leichteren Metall oder dergleichen gebildet werden sollte, kann das Gesamtgewicht hier insgesamt erheblich reduziert werden.

Da es bei sportlichen Fahrrädern auf jedes Gramm Gewicht ankommt, kann so ein erheblicher Beitrag zur Gewichtsverringerung geleistet werden. Außerdem können die Aerodynamik und die Optik eines damit ausgerüsteten Fahrrads verbessert werden, wenn z. B. nur am Hinterrad eine Spanneinrichtung 3 angeordnet ist, während am Vorderrad nur eine Achseinheit 2 verbleibt.

**Bezugszeichenliste:**

| | | | |
|---|---|---|---|
| 1 | Schnellspannvorrichtung | 37 | Rastfeder |
| 2 | Achseinheit | 38 | O-Ring |
| 3 | Spanneinrichtung | 39 | Außenverzahnung |
| 4 | axialer Richtung | 40 | Innenverzahnung |
| 5 | Achse, Steckachse | 41 | Überlappungslänge |
| 6 | Klemmeinrichtung | 42 | Durchmesser |
| 7 | erstes Ende | 100 | Zweirad, Fahrrad |
| 8 | Absatz | 101 | Rad, Vorderrad |
| 9 | Befestigungseinrichtung | 102 | Rad, Hinterrad |
| 10 | zweites Ende | 103 | Rahmen |
| 11 | Zweiradkomponente | 104 | Gabel |
| 12 | Bedienhebel | 105 | Dämpfer |
| 13 | Spannkomponente | 106 | Lenker |
| 14 | Eingriffsstellung | 107 | Sattel |
| 15 | Drehstellung | 108 | Nabe |
| 16 | Koppeleinheit | 109 | Speiche |
| 17 | Anschlusseinheit | 110 | Felge |
| 18 | Koppelkontur (m) | 111 | Scheibenbremse |
| 19 | Anschlusskontur (w) | 112 | Antrieb |
| 20 | Rasteinrichtung | | |
| 21 | Vorspanneinrichtung | | |
| 22 | Druckknopf | | |
| 23 | Kragen | | |
| 24 | Gegenlager | | |
| 25 | Drehmomentbegrenzer | | |
| 26 | Außengewinde | | |
| 27 | Bajonettverschluss | | |
| 28 | Koppelkontur (w) | | |
| 29 | Anschlusskontur (m) | | |
| 30 | Gewinde (in 13 bzw. 22) | | |
| 31 | Spannhülse | | |
| 32 | Rändelscheibe | | |
| 33 | O-Ring | | |
| 34 | Anlagescheibe | | |
| 35 | Rastvertiefung | | |
| 36 | Rastvorsprung | | |

## Patentansprüche

1. Spanneinrichtung (3) zur Montage und Demontage von Zweiradkomponenten (11) insbesondere von wenigstens teilweise muskelbetriebenen Zweirädern (100) wie Fahrrädern, umfassend einen Bedienhebel (12) und eine damit verbundene Spannkomponente (13), wobei die Spannkomponente (13) mit einer Zweiradkomponente (11) drehfest koppelbar ist, und wobei die Spannkomponente (13) von der Zweiradkomponente (11) entkoppelbar ist,
**dadurch gekennzeichnet,**
**dass** der Bedienhebel (12) von einer drehfest mit der Spannkomponente (13) verbundenen Eingriffsstellung (14) in eine frei gegenüber der Spannkomponente (13) drehbare Drehstellung (15) bewegbar ist, während die Spannkomponente (13) drehfest mit der Zweiradkomponente (11) gekoppelt sein kann.

2. Schnellspannvorrichtung (1), insbesondere für wenigstens teilweise muskelbetriebene Zweiräder (100) wie Fahrräder, mit einer Achseinheit (2) und einer Spanneinrichtung (3) nach Anspruch 1,
wobei die Achseinheit (2) eine sich in axialer Richtung (4) erstreckende Achse (5), eine Klemmeinrichtung (6) an dem ersten Ende (7) der Achseinheit (2) und eine Befestigungseinrichtung (9) an einem zweiten Ende (10) der Achseinheit (2) aufweist, wobei die Spanneinrichtung (3) zur Montage und Demontage der Achseinheit (2) an einem Zweirad (100) geeignet ist,
wobei die Spanneinrichtung (3) einen Bedienhebel (12) und eine damit verbundene Spannkomponente (13) umfasst, wobei die Spannkomponente (13) mit der Achseinheit (2) drehfest koppelbar ist, und wobei die Spannkomponente (13) von der Achseinheit (2) entkoppelbar ist,
wobei der Bedienhebel (12) der Spanneinrichtung (3) von einer drehfest mit der Spannkomponente (13) verbundenen Eingriffsstellung (14) in eine frei gegenüber der Spannkomponente (13) drehbare Drehstellung (15) bewegbar ist, während die Spannkomponente (13) drehfest mit der Achseinheit (2) gekoppelt sein kann.

3. Schnellspannvorrichtung (1) nach Anspruch 2, wobei die Spannkomponente (13) eine Koppeleinheit (16) mit einer unrunden Koppelkontur (18, 28) zum Koppeln mit einer entsprechend angepassten Anschlusseinheit (17) mit einer unrund ausgebildeten Anschlusskontur (19, 29) an der Achseinheit (2) aufweist.

4. Schnellspannvorrichtung (1) nach dem vorhergehenden Anspruch, wobei die Koppeleinheit (16) der Spannkomponente (13) zur Montage und Demontage in die Anschlusskontur (19) einführbar ist oder wobei die Koppeleinheit (16) der Spannkomponente (13) zur Montage und Demontage auf die Anschlusskontur (29) der Anschlusseinheit (17) aufbringbar ist.

5. Schnellspannvorrichtung (1) nach einem der vorhergehenden Ansprüche 2 bis 4, wobei wenigstens eine Rasteinrichtung (20) zur Verrastung der Spannkomponente (13) an der Achseinheit (2) vorgesehen ist, um die Spannkomponente (13) verliersicher an der Achseinheit (2) aufzunehmen.

6. Schnellspannvorrichtung (1) nach einem der vorhergehenden Ansprüche 2 bis 5, wobei der Bedienhebel (12) durch eine Bewegung in axialer Richtung (4) gegenüber der Spannkomponente (13) von der Eingriffsstellung (14) in die Drehstellung (15) bewegbar ist.

7. Schnellspannvorrichtung (1) nach einem der vorhergehenden Ansprüche 2 bis 6, wobei der Bedienhebel (12) über eine Vorspanneinrichtung (21) in Richtung der Spannkomponente (13) vorbelastet ist.

8. Schnellspannvorrichtung (1) nach einem der vorhergehenden Ansprüche 2 bis 7, wobei die Spannkomponente (13) an einem Ende die Koppeleinheit (16) zur Kopplung mit der Achseinheit (2) und an dem anderen Ende einen mit einem Kragen (23) versehenen Druckknopf (22) aufweist.

9. Schnellspannvorrichtung (1) nach einem der vorhergehenden Ansprüche 2 bis 8, wobei der Bedienhebel (12) in der Eingriffsstellung (14) über einen Drehmomentbegrenzer (25) mit der Achseinheit (2) gekoppelt ist.

10. Schnellspannvorrichtung (1) nach einem der vorhergehenden Ansprüche 2 bis 9, wobei die Achseinheit (2) wenigstens an dem zweiten Ende (10) hohl ausgebildet ist und/oder wobei die Achseinheit (3) an dem zweiten Ende (10) ein Außengewinde (26) als Befestigungseinrichtung (9) aufweist.

11. Schnellspannvorrichtung (1) nach einem der vorhergehenden Ansprüche 2 bis 10, wobei die Befestigungseinrichtung (9) einen Bajonettverschluss (27) aufweist.

12. Schnellspannvorrichtung (1) nach einem der vorhergehenden Ansprüche 2 bis 11, wobei an dem Bedienhebel (12) und an der Spannkomponente (13) jeweils aneinander angepasste unrunde Kopplungskonturen (39, 40) ausgebildet sind, welche in der Eingriffsstellung (14) in Eingriff miteinander stehen und wobei die unrunden Kopplungskonturen (39, 40) insbesondere als Verzahnungen an dem Bedienhebel (12) und der Spannkomponente (13) ausgebildet sind.

13. Schnellspannvorrichtung (1) nach dem vorhergehenden Anspruch, wobei ein Verhältnis aus einer Überlappungslänge (41) der miteinander im Eingriff stehenden Koppeleinheit (16) und der Anschlusseinheit (17) und einem Durchmesser (42) der Koppeleinheit kleiner als 4:1 und vorzugsweise kleiner als 3:1 beträgt.

14. Zweirad (100) mit einem Rahmen (103) und einer Gabel (104) und einem wenigstens teilweise muskelbetriebenen Antrieb (112) und zwei Rädern (101, 102), nämlich einem Vorderrad (101) und einem Hinterrad (102), wobei jedes Rad eine Nabe (108) und eine zugeordnete Achseinheit (2) aufweist, wobei eine Spanneinrichtung (3) nach Anspruch 1 mit einem Bedienhebel (12) und einer damit verbundenen Spannkomponente (13) angeordnet ist, wobei die Spannkomponente (13) mit der Achseinheit (2) drehfest koppelbar ist, und wobei die Spannkomponente (13) von der Achseinheit (2) entkoppelbar ist,
und dass der Bedienhebel (12) der Spanneinrichtung (3) von einer drehfest mit der Spannkomponente (13) verbundenen Eingriffsstellung (14) in eine frei gegenüber der Spannkomponente (13) drehbare Drehstellung (15) bewegbar ist, während die Spannkomponente (13) drehfest mit der Achseinheit (2) gekoppelt sein kann.

15. Zweirad (100) nach dem vorhergehenden Anspruch, wobei genau eine Spanneinrichtung (3) für die Montage und Demontage der Räder (101, 102) vorgesehen ist und/oder wobei die Spanneinrichtung (3) an der Achseinheit (2) des Hinterrades (102) lösbar befestigt ist.

## Claims

1. Clamping mechanism (3) for mounting and demounting bicycle components (11) in particular of at least partially muscle-powered two-wheeled vehicles (100) such as bicycles, comprising an operating lever (12) and a clamping component (13) connected therewith, wherein the clamping component (13) can be non-rotatably coupled with a bicycle component (11), and wherein the clamping component (13) can be decoupled from the bicycle component (11),
**characterized in**
**that** the operating lever (12) can be moved from an engagement position (14) in which it is non-rotatably connected with the clamping component (13) to a rotary position (15) in which it is freely rotatable relative to the clamping component (13) while the clamping component (13) may be non-rotatably coupled with the bicycle component (11).

2. Quick release device (1) in particular for at least partially muscle-powered two-wheeled vehicles (100) such as bicycles, comprising an axle unit (2) and a clamping mechanism (3) according to claim 1,
wherein the axle unit (2) comprises an axle (5) extending in the axial direction (4), a locking means (6) at the first end (7) of the axle unit (2) and a fastener (9) at a second end (10) of the axle unit (2) wherein the clamping mechanism (3) is suitable for mounting and demounting the axle unit (2) to a two-wheeled vehicle (100),
wherein the clamping mechanism (3) comprises an operating lever (12) and a clamping component (13) connected therewith, wherein the clamping component (13) can be non-rotatably coupled with the axle unit (2), and wherein the clamping component (13) can be decoupled from the axle unit (2),
wherein the operating lever (12) of the clamping mechanism (3) can be moved from an engagement position (14) in which it is non-rotatably connected with the clamping component (13) to a rotary position (15) in which it is freely rotatable relative to the clamping component (13), while the clamping component (13) may be non-rotatably coupled with the axle unit (2).

3. The quick release device (1) according to claim 2 wherein the clamping component (13) comprises a coupling unit (16) having a non-round coupling contour (18, 28) for coupling with a mating connecting unit (17) having a non-round connecting contour (19, 29) on the axle unit (2).

4. The quick release device (1) according to the preceding claim wherein the coupling unit (16) of the clamping component (13) can be inserted in the connecting contour (19) for mounting and demounting or wherein the coupling unit (16) of the clamping component (13) can be applied on the connecting contour (29) of the connecting unit (17) for mounting and demounting.

5. The quick release device (1) according to any of the preceding claims 2 through 4 wherein at least one click-in mechanism (20) is provided for the clamping component (13) to click into the axle unit (2) to accommodate the clamping mechanism (13) on the axle unit (2) secure against loss.

6. The quick release device (1) according to any of the preceding claims 2 through 5 wherein the operating lever (12) can be moved from the engagement position (14) to the rotary position (15) by way of movement in the axial direction (4) relative to the clamping component (13).

7. The quick release device (1) according to any of the preceding claims 2 through 6 wherein the operating lever (12) is biased by way of a biasing device (21) in the direction of the clamping component (13).

8. The quick release device (1) according to any of the preceding claims 2 through 7 wherein the clamping component (13) comprises at one end, the coupling unit (16) for coupling with the axle unit (2) and at the other end, a push button (22) provided with a collar (23).

9. The quick release device (1) according to any of the preceding claims 2 through 8 wherein the operating lever (12) is coupled with the axle unit (2) via a torque limiter (25) in the engagement position (14).

10. The quick release mechanism (1) according to any of the preceding claims 2 through 9 wherein the axle unit (2) is configured hollow at least at the second end (10) and/or wherein the axle unit (3) comprises an external thread (26) for a fastener (9) at the second end (10).

11. The quick release mechanism (1) according to any of the preceding claims 2 through 10 wherein the fastener (9) comprises a bayonet joint (27).

12. The quick release device (1) according to any of the preceding claims 2 through 11 wherein both the operating lever (12) and the clamping component (13) show non-round coupling contours (39, 40) mating with one another which are engaged with one another in the engagement position (14), and wherein the non-round coupling contours (39, 40) are in particular configured as toothings on the operating lever (12) and the clamping component (13).

13. The quick release device (1) according to the preceding claim wherein the ratio of a length of overlap (41) of the coupling unit (16) in engagement with the connecting unit (17) relative to a diameter (42) of the coupling unit, is less than 4:1 and preferably less than 3:1.

14. Two-wheeled vehicle (100) comprising a frame (103) and a fork (104) and an at least partially muscle-powered drive (112) and two wheels (101, 102), namely a front wheel (101) and a rear wheel (102), wherein each wheel comprises a hub (108) and a pertaining axle unit (2), wherein a clamping mechanism (3) according to claim 1 having an operating lever (12) and a clamping component (13) connected therewith is disposed wherein the clamping component (13) can be non-rotatably coupled with the axle unit (2), and wherein the clamping component (13) can be decoupled from the axle unit (2),
and that the operating lever (12) of the clamping mechanism (3) can be moved from an engagement position (14) in which it is non-rotatably connected with the clamping component (13) to a rotary position (15) in which it is freely rotatable relative to the clamping component (13), while the clamping component (13) may be non-rotatably coupled with the axle unit (2).

15. The two-wheeled vehicle (100) according to the preceding claim wherein exactly one clamping mechanism (3) is provided for mounting and demounting the wheels (101, 102) and/or wherein the clamping mechanism (3) is releasably fastened to the axle unit (2) of the rear wheel (102).

## Revendications

1. Dispositif tendeur (3) destiné au montage et au démontage d'éléments de deux-roues (11), notamment au moins de deux-roues (100) entraînés au moins partiellement par la force musculaire tels que des bicyclettes, comprenant un levier de manoeuvre (12) et un élément de tension (13) qui y est relié, l'élément de tension (13) pouvant être couplé solidaire en rotation, à un élément de deux-roues (11) et l'élément de tension (13) pouvant être désolidarisé de l'élément de deux-roues (11), **caractérisé en ce**
**que** le levier de manoeuvre (12) est mobile pour passer d'une position d'engagement (14), reliée solidaire en rotation à l'élément de tension (13), à une position de rotation (15) libre par rapport à l'élément de tension (13), tandis que l'élément de tension (13) peut être couplé solidaire en rotation à l'élément de deux-roues (11).

2. Dispositif tendeur rapide (1), notamment pour deux-roues (100) entraînés au moins partiellement par la force musculaire, tels que les bicyclettes, dotés d'une unité d'essieu (2) et d'un dispositif tendeur (3) selon la revendication 1, l'unité d'essieu (2) présentant un essieu (5) s'étendant dans le sens axial (4), un dispositif de serrage (6) à la première extrémité (7) de l'unité d'essieu (2) et un dispositif de fixation (9) à une deuxième extrémité (10) de l'unité d'essieu (2), le dispositif tendeur (3) étant adapté au montage et au démontage de l'unité d'essieu (2) sur un deux-roues (100), le dispositif tendeur (3) comprenant un levier de manoeuvre (12) et un élément de tension (13) qui y est relié, l'élément de tension (13) étant couplé solidaire en rotation à l'unité d'essieu (2) et l'élément de tension (13) pouvant être désolidarisé de l'unité d'essieu (2),
le levier de manoeuvre (12) du dispositif tendeur (3) étant mobile pour passer d'une position d'engagement (14), reliée solidaire en rotation à l'élément de tension (13), à une position de rotation (15) libre par rapport à l'élément de tension (13), tandis que l'élément de tension (13) peut être couplé solidaire en rotation à l'unité d'essieu (2).

3. Dispositif tendeur rapide (1) selon la revendication 2, l'élément de tension (13) présentant à l'unité d'essieu (2) une unité d'accouplement (16) dotée d'un contour d'accouplement (18, 28) non circulaire pour coupler à une unité de raccordement (17) correspondante adaptée et à contour de raccordement (19, 29) formé non circulaire.

4. Dispositif tendeur rapide (1) selon la revendication précédente, l'unité d'accouplement (16) de l'élément de tension (13) de montage ou de démontage pouvant être introduite dans le contour de raccordement (19), ou l'unité d'accouplement (16) de l'élément de tension (13) de montage et démontage pouvant être appliquée sur le contour de raccordement (29) de l'unité de raccordement (17).

5. Dispositif tendeur rapide (1) selon l'une quelconque des revendications précédentes 2 à 4, au moins un dispositif d'arrêt (20) étant prévu pour verrouiller l'élément de tension (13) à l'unité d'essieu (2) pour accueillir de manière imperdable l'élément de tension (13) sur l'unité d'essieu (2).

6. Dispositif tendeur rapide (1) selon l'une quelconque des revendications précédentes 2 à 5, le levier de manoeuvre (12) étant mobile pour passer, par un mouvement dans le sens axial (4) par rapport à l'élément de tension (13), de la position d'engagement (14) à la position de rotation (15).

7. Dispositif tendeur rapide (1) selon l'une quelconque des revendications précédentes 2 à 6, le levier de manoeuvre (12) étant sollicité dans le sens de l'élément de tension (13) par le biais d'un dispositif de pré-tension (21).

8. Dispositif tendeur rapide (1) selon l'une quelconque des revendications précédentes 2 à 7, l'élément de tension (13) présentant à une extrémité l'unité d'accouplement (16) pour coupler à l'unité d'essieu (2) et à l'autre extrémité un bouton-poussoir (22) pourvu d'une collerette (23).

9. Dispositif tendeur rapide (1) selon l'une quelconque des revendications précédentes 2 à 8, le levier de manoeuvre (12) étant couplé dans la position d'engagement (14) à l'unité d'essieu (2) par le biais d'un limiteur de couple de rotation (25).

10. Dispositif tendeur rapide (1) selon l'une quelconque des revendications précédentes 2 à 9, l'unité d'essieu (2) étant formée creuse au moins à la deuxième extrémité (10) et/ou l'unité d'essieu (3) présentant à la deuxième extrémité (10) un filetage extérieur (26) servant de dispositif de fixation (9).

11. Dispositif tendeur rapide (1) selon l'une quelconque des revendications précédentes 2 à 10, le dispositif de fixation (9) présentant un verrouillage à baïonnette (27).

12. Dispositif tendeur rapide (1) selon l'une quelconque des revendications précédentes 2 à 11, des contours d'accouplement (39, 40) non circulaires adaptés l'un à l'autre étant formés sur le levier de manoeuvre (12) et sur l'élément de tension (13), lesquels contours s'engagent l'un dans l'autre dans la position d'engagement (14) et les contours d'accouplement (39, 40) non circulaires étant formés notamment en tant que pas d'engrenage sur le levier de manoeuvre (12) et sur l'élément de tension (13).

13. Dispositif tendeur rapide (1) selon la revendication précédente, un rapport résultant d'une longueur de recouvrement (41) de l'unité d'accouplement (16) et de l'unité de raccordement (17) engagées l'une dans l'autre, sur un diamètre (42) de l'unité d'accouplement étant inférieur à 4:1 et de préférence inférieur à 3:1.

14. Deux-roues (100) doté d'un cadre (103), d'une fourche (104), d'un entraînement (112) entraîné au moins partiellement par force musculaire et de deux roues (101, 102), c'est-à-dire d'une roue avant (101) et d'une roue arrière (102), chaque roue présentant un moyeu (108) et une unité d'essieu (2) associée, un dispositif tendeur (3) selon la revendication 1 étant agencé doté d'un levier de manoeuvre (12) et d'un élément de tension (13) qui y est relié, l'élément de tension (13) pouvant être couplé solidaire en rotation à l'unité d'essieu (2) et l'élément de tension (13) pouvant être désolidarisé de l'unité d'essieu (2),
et que le levier de manoeuvre (12) du dispositif de tension (3) est mobile pour passer d'une position d'engagement (14), reliée solidaire en rotation à l'élément de tension (13), à une position de rotation (15) libre par rapport à l'élément de tension (13) tandis que l'élément de tension (13) peut être couplé solidaire en rotation à l'unité d'essieu (2).

15. Deux-roues (100) selon la revendication précédente, exactement un dispositif tendeur (3) étant prévu pour le montage et le démontage des roues (101, 102) et/ou le dispositif tendeur (3) étant fixé de manière détachable à l'unité d'essieu (2) de la roue arrière (102).
